# EUROPEAN PATENT SPECIFICATION

(11) **EP 2 749 441 B1**
(45) Date of publication and mention of the grant of the patent: **23.11.2016**
(21) Application number: 13199404.8
(22) Date of filing: 23.12.2013
(51) Int. Cl.: B60J 11/04

(54) **Improved protection system for a vehicle**
Verbessertes Schutzsystem für ein Fahrzeug
Système de protection amélioré pour un véhicule

(30) Priority: 28.12.2012 IT MI20122266
(43) Date of publication of application: 02.07.2014
(73) Proprietor: Confezioni Andrea Italia S.r.l., 21100 Varese (IT)
(72) Inventor: Tavelli, Andrea, 21100 VARESE (IT)
(74) Representative: Biallo, Dario

(56) References cited:
- EP-A1- 1 405 748
- DE-A1- 10 212 150
- DE-U1- 20 110 609

## Description

The present invention refers to an improved protection system for a vehicle, particularly but not exclusively used in the field of car manufacturing.

Nowadays, it is known to cover, at least partially, the body of motor vehicles parked in car dealer or manufacturing plant parking lots with different types of cloths, which protect the outer finishing of the body itself from the weather, from acts of vandalism and from accidental impacts.

In the present description by the term body we mean the metal part of the external bodywork of a vehicle not comprising the parts in glass like the windows, the windshield and the rear window.

The body 20 generally comprises a main carrier body 21 and a plurality of mobile covering elements 22 like the doors, the boot lid and the engine bonnet.

Protection systems are commonly used that comprise protective cloths of elastic fabric that are applied on the body for example through elastic bands that engage on corresponding hooking portions of the body.

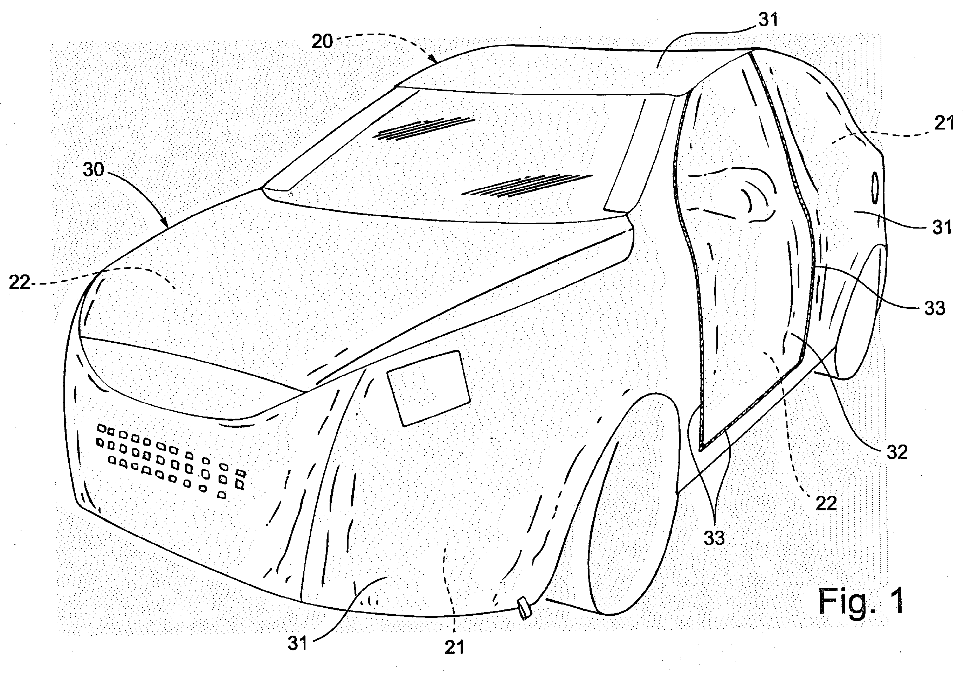

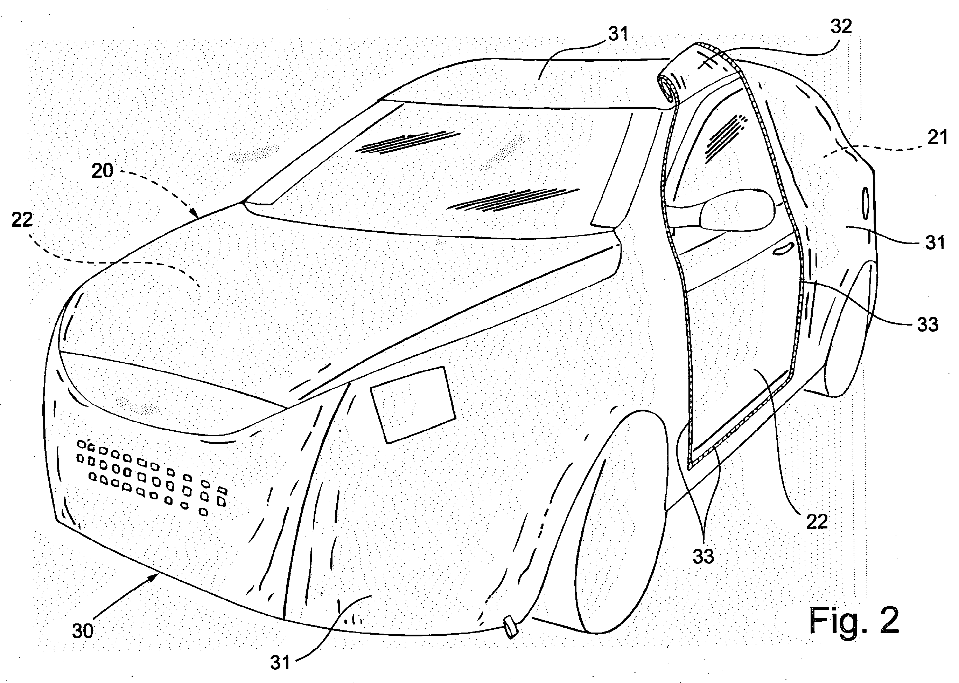

Figures 1 and 2, represent a known protective cloth 30 that is applied to a motor vehicle; such a protective cloth 30 comprises a main covering portion 31 shaped so as to adhere to the main body 21 of the body 20, and a portion for covering a door 32 that is connected to the main portion 31 through a hinge 33.

In such a way, the portion for covering the door 32 can take up a covering position when the hinge is closed and a raised position when the hinge is open; in detail, when the hinge is open the covering portion of the door can be easily rolled up and constrained at the top to the main portion 31, as can be seen in figure 2. When the covering portion of the door is in the covering position the protective cloth 30 almost entirely covers the body of the motor vehicle which can thus be protected from acts of vandalism or from the atmosphere events both when it is parked in a parking lot and when it is being transported for example on a train or an articulated lorry from the factory to the car dealer. On the other hand, when the covering portion of the door is in the raised position it makes it possible to open the door and to access the passenger compartment of the motor vehicle. In such a way, when a generic operator needs to move the motor vehicle to load it, for example on a train, he does not need to remove the entire protection cloth 30 in order to access the passenger compartment. In such a case, indeed, the operator simply has to position the covering portion of the door in the raised position, in which such a door can be easily opened. The operator can, then, move the motor vehicle and subsequently restore the total protection of the body by positioning the covering portion of the door in the covering position.

Such moving operations of the motor vehicles, however, are often very slow and complex. It often occurs that once the operators have loaded the motor vehicle on the train or on the articulated lorry designated for transporting it, they forget the covering portion of the door in the raised position, leaving the finishing of the door exposed to the risk of becoming damaged. Moreover, it should be considered that if the motor vehicle is positioned on an articulated lorry or a train with the trailer or the carriage that is uncovered and the covering portion of the door is left in the raised position, during transportation, air penetrates inside the space between the protection cloth and the body causing the violent flapping of the cloth itself and in extreme cases the detachment of the cloth from the body.

Document EP 1 405 748 describes a protection system for a vehicle adapted to be coupled to said vehicle through constraining means. In particular, such a system comprises a sheet for covering the body of the vehicle provided with a secondary sheet for covering the doors or the hood which has to be removed for permitting the opening of the doors or hoods.

The purpose of the present invention is that of avoiding the aforementioned drawbacks and in particular that of conceiving an improved protection system for a vehicle that is capable of allowing the opening of the mobile covering elements in a simple and fast manner whilst ensuring the protection of the body.

These and other purposes according to the present invention are achieved by making a protection system as outlined in claim 1.

Further characteristics of the protection system are object of the dependent claims.

The characteristics and the advantages of a protection system according to the present invention shall become clearer from the following description, given as an example and not for limiting purposes, with reference to the attached schematic drawings, in which:
- figure 1 is a first perspective schematic view of a protection cloth, of the known type, which is applied to a motor vehicle;
- figure 2 is a second perspective schematic view of the protection cloth of figure 1 applied to a motor vehicle;

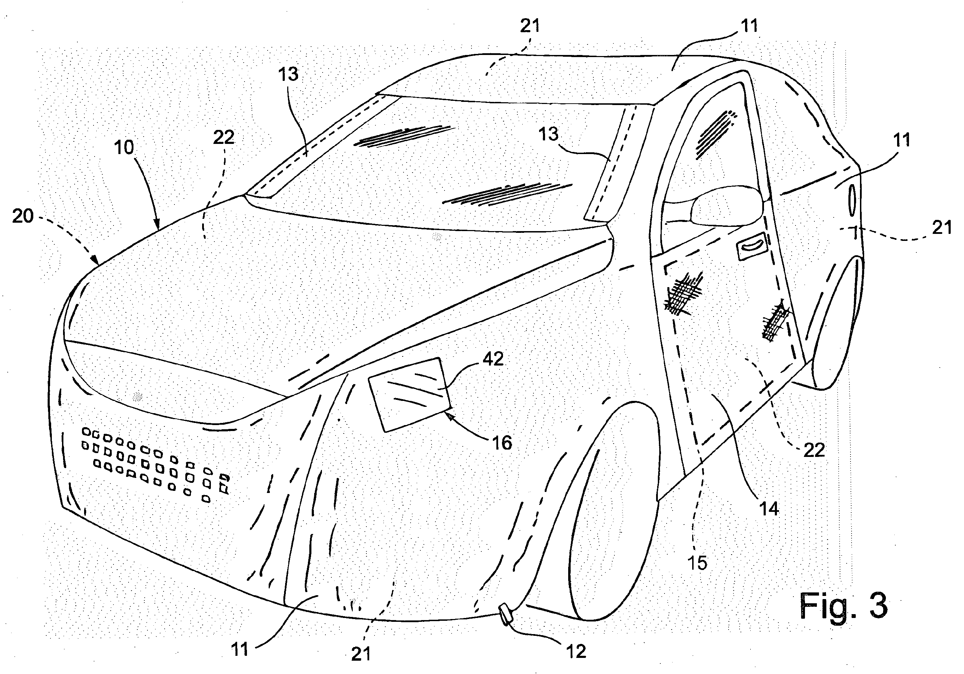

- figure 3 is a perspective schematic view of a protection system according to the present invention;
- figure 4 is a first detailed schematic view of the protection system of figure 3;
- figure 5 is a second detailed schematic view of the protection system of figure 3;

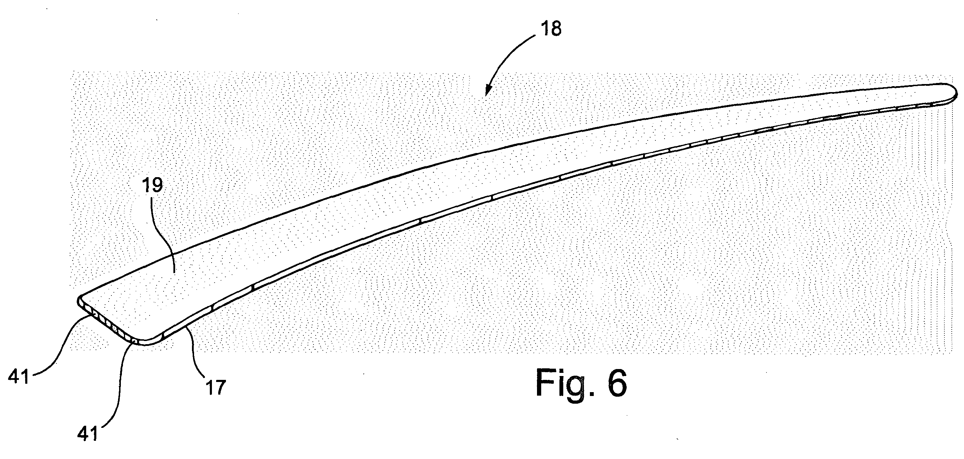

- figure 6 is a schematic perspective view of a reinforcement element comprised in the protection system of figure 3.

With reference to the figures, an improved protection system for a vehicle is shown, wholly indicated with reference numeral 10.

Such a vehicle comprises a body 20 which is in turn' of the type comprising a main carrier body 21 and a plurality of mobile covering elements 22 like the doors, the boot lid and the engine bonnet. Such covering elements 22 are connected to the main carrier body 21 through hinging means 23 and are mobile between an opening position and a closing one.

The protection system 10 comprises a main covering cloth 11 that is shaped so as to cover the main carrier body 21 and is provided with perimetrical constraining means 12, 13 for being applied to the main carrier body 11. The shape varies depending on the vehicle model.

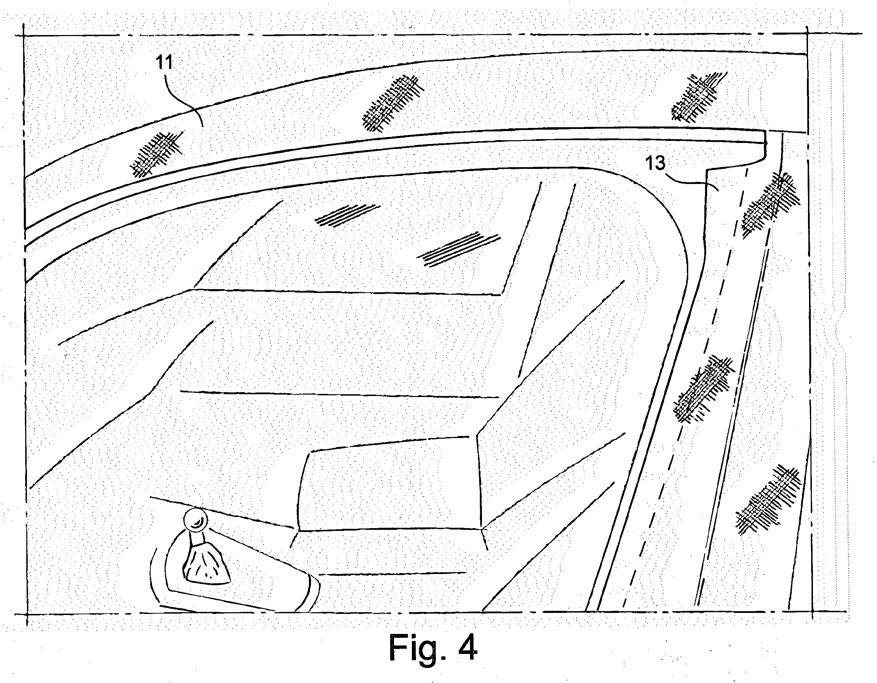

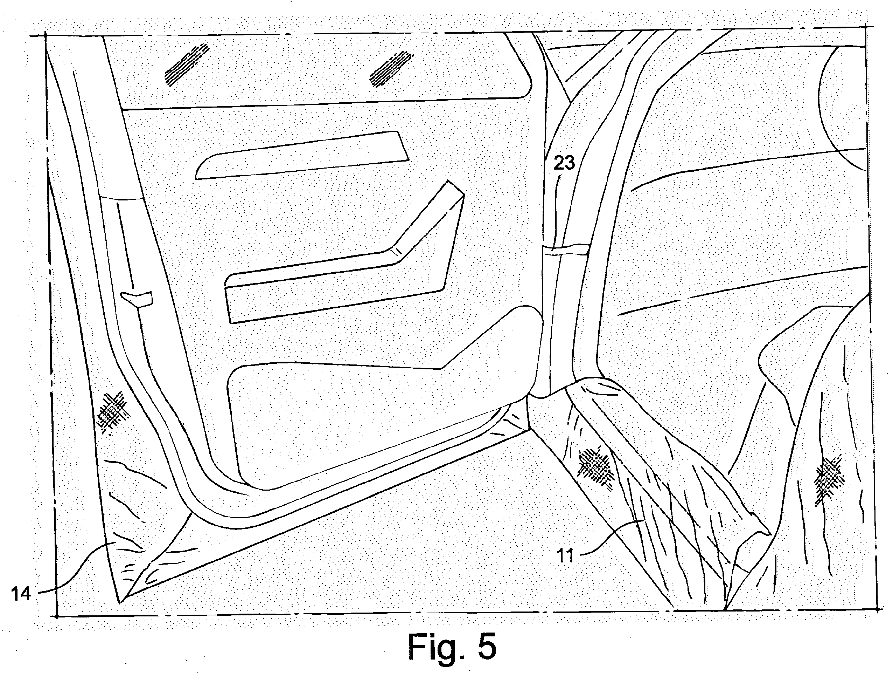

The perimetrical constraining means 12, 13 can be for example one or more elastic bands 12 that engage with corresponding hooking portions (not illustrated) of the body 20, or a perimetrical gluing portion 13 covered with a layer of adhesive material on which a removable protective film is applied. As it is possible to observe in figures 4 and 5, the gluing portion 13 can be obtained at the part of the main covering cloth 11 that is intended for adhering to the portion of the main body 21 close to the closing gaskets of the passenger compartment or of the engine bonnet or of the boot lid. Advantageously, the adhesive material is a glue for paints which, once the main covering cloth 11 has been removed, does not leave any trace on the adhesion area.

According to the present invention, the protection system 10 comprises at least one secondary covering cloth 14 that is suitable for being applied, in a removable manner, through perimetrical fixing means 15 to one of the mobile covering elements 22 in a way such as to at least partially protect it.

Such a secondary cloth 14 is, in particular, shaped in a corresponding manner to the shape of the covering element 22 which it is intended to protect.

Preferably, the secondary cloth 14 is connected to the main cloth 11 at the hinging means 23, so as to make a flag portion.

In such a way, therefore, the protected covering element can advantageously be positioned in the opening position without necessarily having to remove the protection system 10 or a part thereof. Indeed, the secondary cloth 14 remains applied to the covering element 22 even when the latter is opened.

It is worth underlining that the secondary cloth 14 and the main cloth 11 can be made as an enbloc, being connected to one another through a folding line (not illustrated).

As an alternative, the secondary cloth 14 can be coupled with the main cloth 11 through sewing or welding or any other coupling means.

Preferably, the fixing means 15 can comprise one perimetrical layer of adhesive material on which a removable protecting film is applied. In such a case, the secondary cloth 14 is applied to the covering element 22 to be protected through gluing.

As an alternative or in addition, the fixing means 15 can comprise elastic bands or other fixing means that are suitable for being constrained with the corresponding constraint portions present on the covering element 22 to be protected.

In the case in which the covering element 22 to be protected is a door of the vehicle, the secondary cloth 14 is shaped so as to make the handle of the door available. In this case, the secondary cloth 14 can advantageously be perforated at the handle, allowing it to be gripped.

Preferably the protection system 10 comprises one bag element (not illustrated) that is connected to the secondary cloth 14 at the handle; such a bag element is advantageously intended for at least partially containing the handle and for allowing it to be gripped.

In such a way, also the portion of the door close to the handle remains covered and protected for the entire duration of the application of the protection system 10.

Preferably, the protection system 10 also comprises a reinforcement element 18 at the wheel arch portion of the main carrier body 21 of the body 20, where by wheel arch portion we mean the area of the main body that develops around the front and back wheels i.e. the mudguards. Such a reinforcement element can be glued or fixed in any way to the main cloth 11.

The reinforcement element 18 can be applied over the outer surface of the wheel arch portion; in such a case, the reinforcement element 18 is used for further protecting the wheel arch portion from accidental impacts.

The reinforcement element 18 can also be applied over the inner surface of the wheel arch portion; in such a case, the reinforcement element 18 makes it possible to make the application of the protection system 10 on the body 20 more stable.

Preferably, the reinforcement element 18 has a curvilinear profile and comprises an upper surface 19 and a lower surface 17 that are connected to each other by means of a plurality of tubular elements 41 that are side by side in succession. In such a way such a reinforcement element 18 is rigid and flexible at the same time allowing the cloth 10 to be applied easily. Preferably, the reinforcement element 18 is made up of plastic material.

In any case, it is worth underlining that the reinforcement element 18 can be also comprised in a protection cloth like those known in the state of the art.

Preferably, the protection system 10 comprises a portion for covering the front and rear lights 16 of the vehicle.

By front and rear lights we mean the front and rear light groups of the vehicle, respectively.

Such a light covering portion 16 can be made as an enbloc with the main covering cloth 11 or with the secondary cloth 14 that is intended for covering the engine bonnet or the boot lid.

As an alternative, the light covering portion 16 is connected to the protection system through sewing or gluing or a velcro system and so on.

Preferably, the light covering portion 16 comprises two layers that are coupled with one another and in particular a first inner layer (not illustrated) of scratchproof semi-transparent material and a second outer transparent layer 42.

In such a way, the inner layer adheres to the lights protecting them from accidental impacts and at the same time ensures the passage of light, even if attenuated. The inner layer is for example made in a material of the non woven fabric type.

The outer transparent layer 42 is preferably more resistant than the inner layer and ensures the integrity thereof.

The outer layer 42 is for example made of flexible transparent plastic material.

In any case, it is worth underlining that the light covering portion 16 can also be comprised in a protection cloth like those known at the state of the art.

From the description above the characteristics of the protection system object of the present invention should be clear, just like the relative advantages should also be clear.

Indeed, the protection system according to the present invention makes it possible to open the mobile covering elements of the body in a rapid and simple manner while at the same time ensuring the protection thereof. Finally, it should be clear that the protection system thus conceived can in any case undergo numerous modifications.

In practice the materials used, as well as the dimensions, can be any according to the technical requirements.

## Claims

1. Improved protection system (10) for a vehicle having a body of the type comprising a main carrier body (21) and a plurality of covering elements (22), in particular an engine bonnet or a boot lid or a door, connected to said main carrier body (21) through hinging means (23) and mobile between an opening position and a closing one, said protection system (10) comprising:
- a main covering cloth (11) shaped so as to cover said main carrier body (21) and provided with perimetrical constraining means (12, 13) for being applied on said main carrier body (21);
- at least one secondary covering cloth (14) suitable for being applied in a removable manner through perimetrical fixing means (15) on one of said covering elements (22) mobile so as to protect it at least partially and so as to allow the opening of said protected covering element without having to necessarily remove said protection system (10) or a part thereof;
and being **characterised in that** it comprises a reinforcing element (18) at the wheel arch portion of said main carrier body (21) of said body (20), said reinforcement element (18) having a curvilinear profile and comprising an upper surface (19) and a lower surface (17) connected to each other by means of a plurality of tubular elements (41) side by side in succession.

2. Protection system (10) according to claim 1 wherein said secondary covering cloth (14) is connected to said main covering cloth (11) at said hinging means (23), so as to make a flag portion.

3. Protection system (10) according to any of the preceding claims wherein said covering element (22) to be protected is a door of said vehicle and said secondary covering cloth (14) is shaped so as to make the handle of said door available.

4. Protection system (10) according to claim 3 comprising one bag element connected to said secondary covering cloth (14) suitable for containing at least partially the handle of said door and for permitting the gripping of the same.

5. Protection system (10) according to any of the preceding claims wherein said fixing means (15) comprise a layer of adhesive material whereon a removable protecting film is applied.

6. Protection system (10) according to any of the preceding claims comprising a portion for covering the front and rear lights (16) of said vehicle, said light covering portion (16) being connected to said main covering cloth (11).

7. Protection system (10) according to claim 6 wherein said light covering portion (16) comprises a first inner layer of scratchproof semitransparent material and a second outer transparent layer (42), said layers being coupled to each other.

## Patentansprüche

1. Verbessertes Schutzsystem (10) für ein Fahrzeug mit einer Karosserie des Typs, der einen Hauptträgerkörper (21) und mehrere Abdeckelemente (22) umfasst, insbesondere eine Motorhaube oder einen Kofferraumdeckel oder eine Tür, die mit dem Hauptträgerkörper (21) durch Anlenkmittel (23) verbunden und zwischen einer Offenstellung und einer Geschlossenstellung bewegbar sind, wobei das Schutzsystem (10) Folgendes umfasst:
- einen Hauptverkleidungsstoff (11), der derart geformt ist, dass der Hautträgerkörper (21) bedeckt wird, und mit einer umlaufenden Einspanneinrichtung (12, 13) versehen ist, um auf dem Hauptträgerkörper (21) angebracht zu werden;
- mindestens einen Hilfsverkleidungsstoff (14), der dazu geeignet ist, auf entfernbare Weise mittels umlaufender Befestigungsmittel (15) an einem der Abdeckelemente (22) angebracht zu werden, die beweglich sind, um es mindestens teilweise zu schützen und ein Öffnen des geschützten Abdeckelements zu ermöglichen, ohne dass das Schutzsystem (10) oder ein Teil desselben entfernt werden muss;
**dadurch gekennzeichnet, dass** es ein Verstärkungselement (18) am Radkastenabschnitt des Hauptträgerkörpers (21) der Karosserie (20) umfasst, wobei das Verstärkungselement (18) ein kurvenförmiges Profil sowie eine obere Oberfläche (19) und eine untere Oberfläche (17) aufweist, die durch mehrere nebeneinander hintereinander liegende röhrenförmige Elemente (41) verbunden sind.

2. Schutzsystem (10) nach Anspruch 1, wobei der Hilfsverkleidungsstoff (14) mit dem Hauptverkleidungsstoff (11) an die Anlenkmittel (23) derart verbunden ist, dass ein Fahnenabschnitt entsteht.

3. Schutzsystem (10) nach einem beliebigen der vorstehenden Ansprüche, wobei das zu schützende Abdeckelement (22) eine Tür des Fahrzeugs ist und der Hilfsverkleidungsstoff (14) derart geformt ist, dass der Griff der Tür zugänglich ist.

4. Schutzsystem (10) nach Anspruch 3, umfassend ein Taschenelement, das mit dem Hilfsverkleidungsstoff (14) verbunden und dazu geeignet ist, den Griff der Tür mindestens teilweise aufzunehmen und ein Ergreifen desselben zu ermöglichen.

5. Schutzsystem (10) nach einem beliebigen der vorstehenden Ansprüche, wobei die Befestigungsmittel (15) eine Klebstoffschicht umfassen, auf der ein entfernbarer Schutzfilm aufgebracht ist.

6. Schutzsystem (10) nach einem beliebigen der vorstehenden Ansprüche, umfassend einen Abschnitt zum Abdecken der Scheinwerfer und der Rückleuchten (16) des Fahrzeugs, wobei der Leuchtenabdeckabschnitt (16) mit dem Hauptverkleidungsstoff (11) verbunden ist.

7. Schutzsystem (10) nach Anspruch 6, wobei der Lechtenabdeckabschnitt (16) eine erste Innenschicht aus kratzfestem, halbtransparentem Material und eine zweite, transparente Außenschicht (42) umfasst, wobei die Schichten miteinander verbunden sind.

## Revendications

1. Système de protection amélioré (10) pour un véhicule ayant un corps du type comprenant un corps support principal (21) et une pluralité d'éléments de revêtement (22), en particulier un capot de moteur ou un couvercle de coffre ou une porte, connectés audit corps support principal (21) par l'intermédiaire de moyens d'articulation (23) et mobiles entre une position d'ouverture et une position de fermeture, ledit système de protection (10) comprenant :
- une toile de couverture principale (11) profilée de manière à couvrir ledit corps support principal (21) et munie de moyens de blocage périphériques (12, 13) pour être appliquée sur ledit corps support principal (21) ;
- au moins une toile de couverture secondaire (14) adaptée pour être appliquée de manière amovible par l'intermédiaire de moyens de fixation périphériques (15) sur au moins un desdits éléments de revêtement (22) mobiles de manière à le protéger au moins partiellement et de manière à permettre l'ouverture dudit élément de revêtement protégé sans avoir à retirer obligatoirement ledit système de protection (10) ou une partie de celui-ci ;
et étant **caractérisé en ce qu'**il comprend un élément de renforcement (18) au niveau d'une portion de passage de roue dudit corps support principal (21) dudit corps (20), ledit élément de renforcement (18) ayant un profil curviligne et comprenant une surface supérieure (19) et une surface inférieure (17) connectées entre elles au moyen d'une pluralité d'éléments tubulaires (41) côte à côte en succession.

2. Système de protection (10) selon la revendication 1, dans lequel ladite toile de couverture secondaire (14) est connectée à ladite toile de couverture principale (11) au niveau desdits moyens d'articulation (23), de manière à réaliser une portion de volet.

3. Système de protection (10) selon l'une quelconque des revendications précédentes, dans lequel ledit élément de revêtement (22) à protéger est une porte dudit véhicule et ladite toile de couverture secondaire (14) est profilée de manière à rendre disponible la poignée de ladite porte.

4. Système de protection (10) selon la revendication 3, comprenant un élément de poche connecté à ladite toile de couverture secondaire (14), adapté pour contenir au moins partiellement la poignée de ladite porte et pour permettre la préhension de celle-ci.

5. Système de protection (10) selon l'une quelconque des revendications précédentes, dans lequel lesdits moyens de fixation (15) comprennent une couche de matériau adhésif sur lequel un film de protection détachable est appliqué.

6. Système de protection (10) selon l'une quelconque des revendications précédentes, comprenant une portion pour couvrir les feux avant et arrière (16) dudit véhicule, ladite portion de couverture des feux (16) étant connectée à ladite toile de couverture principale (11).

7. Système de protection (10) selon la revendication 6, dans lequel ladite portion de couverture des feux (16) comprend une première couche intérieure de matériau semi-transparent résistant aux rayures et une deuxième couche transparente extérieure (42), lesdites couches étant couplées l'une à l'autre.
